Europäisches Patentamt

European Patent Office

Office européen des brevets

(11) Publication number: **0 104 503**
**B1**

(12) **EUROPEAN PATENT SPECIFICATION**

(45) Date of publication of patent specification: **03.01.90**

(51) Int. Cl.⁵: **G 05 B 19/405**

(21) Application number: **83108680.6**

(22) Date of filing: **02.09.83**

(54) **Numerical control processing system and machine tool including the system.**

(30) Priority: **03.09.82 JP 153509/82**

(43) Date of publication of application:
**04.04.84 Bulletin 84/14**

(45) Publication of the grant of the patent:
**03.01.90 Bulletin 90/01**

(84) Designated Contracting States:
**DE FR GB IT**

(56) References cited:
**GB-A-2 118 328**

(73) Proprietor: **MITSUBISHI DENKI KABUSHIKI KAISHA**
**2-3, Marunouchi 2-chome Chiyoda-ku Tokyo 100 (JP)**

(72) Inventor: **Takagawa, Kiyoshi c/o Mitsubishi Denki K. K.**
**Nagoya Works, No. 1-14 Yadaminami 5-chome Higashi-ku Nagoya-shi Aichi (JP)**

(74) Representative: **Lehn, Werner, Dipl.-Ing. et al Hoffmann, Eitle & Partner Patentanwälte Arabellastrasse 4 D-8000 München 81 (DE)**

Courier Press, Leamington Spa, England.

## Description

The present invention relates to a numerical control (hereinafter referred to as an NC) processing system, and to a machine tool including such a system.

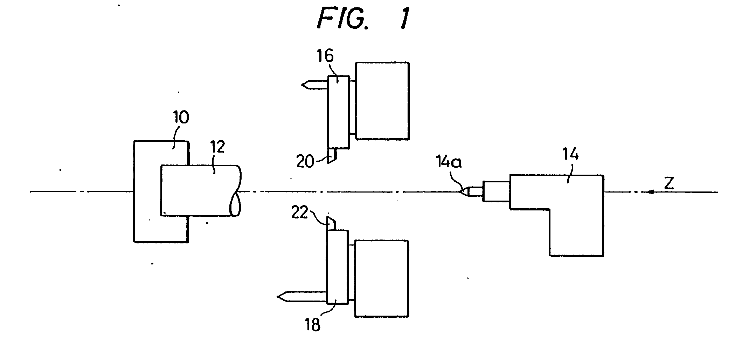

An NC processing system serves to command and control the position of a tool with respect to an object to be worked (workpiece) by numerical information corresponding to the position, so as to perform machining of the workpiece. According to an NC processing system, complex shapes can be formed easily and accurately with improved producibility. With respect to a machine tool such as a lathe utilizing an NC system, it has been proposed to use a lathe having double tool carriers. Figure 1 shows the outline of such a lathe.

In Figure 1, a workpiece 12 is positioned and fixed by a chuck 10 rotatable about an axis of rotation (Z-axis), the workpiece 12 being supported at one end by a tip portion 14a of a tail stock 14. Cutting tools 20 and 22 for performing machining on the workpiece 12 are fixed on first and second capstan rests 16 and 18 (rests I, II) respectively. In machining the workpiece 12, the first and second capstan rests 16 and 18 are moved in the Z-direction as shown by an arrow, to cause the cutting tools 20 and 22 to machine the workpiece 12.

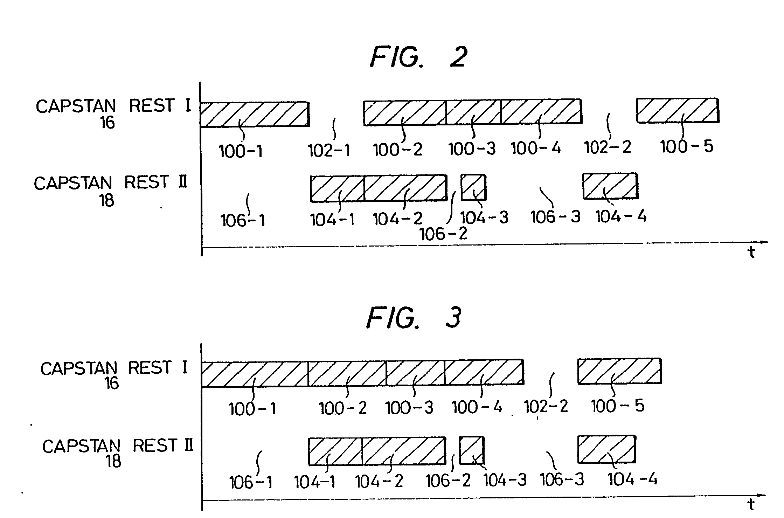

In Figure 2, the period of operating time of each of the first and second capstan carriers 16 and 18 is shown in the form of a Gantt chart, the period of processing time consisting of the periods of time of travelling and idling of each of the capstan carriers. That is, the operating period of the first capstan rest 16 consists of travelling periods 100—1 to 100—5 and idling periods 102—1 and 102—2, while the operating period for the second capstan rest 18 consists of travelling periods 104—1 to 104—4 and idling periods 106—1 to 106—3.

In the conventional NC processing system, there is a problem in that the processing period is sometimes lengthy because the operating period for each capstan carrier is obtained by an automatic program, and actual processing is performed according to the thus obtained period. For example, there is a disadvantage in some cases in that the operating period is lengthy, because the travelling period 100—2 of the first capstan carrier 16 is set after the travelling period 104—1 of the second capstan carrier 18 as shown in Figure 2, although both the travelling periods 104—1 and 100—2 can be set at the same time. Actual working is performed in accordance with the Gantt chart of Figure 2, resulting in an increased processing period.

The present invention is directed to this problem in the prior art, and an object of the present invention is to provide an NC working system in which the working time can be reduced.

According to the invention, there is provided a numerical control system for a machine tool having at least two tool carriers characterised in that an operating program determines sequences of travelling and idling times for respective tool carriers; in that means are provided for displaying said time sequences as a graph whereby an operator may identify those travelling and idling times of said respective carriers which may be performed simultaneously; and in that means are provided for correction shifting said travelling and idling times so as to reduce the overall processing time.

With reference to GB—A—2,118,328, the applicant has voluntarily limited the scope of the present application by submitting separate claims for the U.K.

For a better understanding of the invention, and to show how the same may be carried into effect, reference will now be made, by way of example, to the accompanying drawings, in which:

Figure 1 is an explanatory diagram showing the outlines of a lathe having double tool carriers;

Figure 2 is a Gantt chart showing the conventional processing period;

Figure 3 is a Gantt chart showing a processing period developed according to the principle of the present invention;

Figure 4 is an explanatory diagram showing a preferred embodiment of a display for achieving the NC working system according to the present invention;

Figures 5 and 6 are explanatory diagrams showing the displayed states on the display according to this embodiment of the present invention; and

Figure 7 is a flowchart according to this embodiment of the present invention.

In Figure 3, a Gantt chart according to the principle of the present invention is shown, in which, as is apparent in comparison with Figure 2, the travelling periods 100—2 to 100—5 and the idling period 102—2 of the first capstan tool carrier 16 are shifted leftwardly for correction so as to make unnecessary the idling period 102—1 of the first capstan rest 16. Thus, according to the principle of the present invention, it is possible to attain a reduction in the processing time.

The numerically controlled tool using the first and second carriers may be a lathe apparatus, a milling machine or any other numerically-controlled machine tool having at least two independently operating tool carriers.

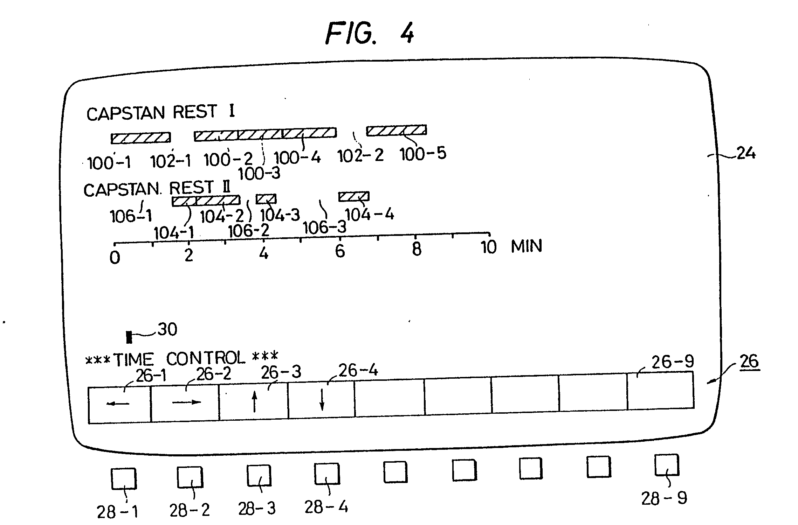

Figure 4 shows a preferred embodiment of the display for achieving the NC working system according to the present invention.

In Figure 4, on the picture face of a display 24, the respective working periods for the first and second capstan tool carriers are displayed, and a menu display portion 26 is reserved for displaying nine menu items 26—1 to 26—9. Menu selection switches 28—1 to 28—9 for selecting the items 26—1 to 26—9 are provided below the display 24 corresponding to the menu items 26—1 to 26—9.

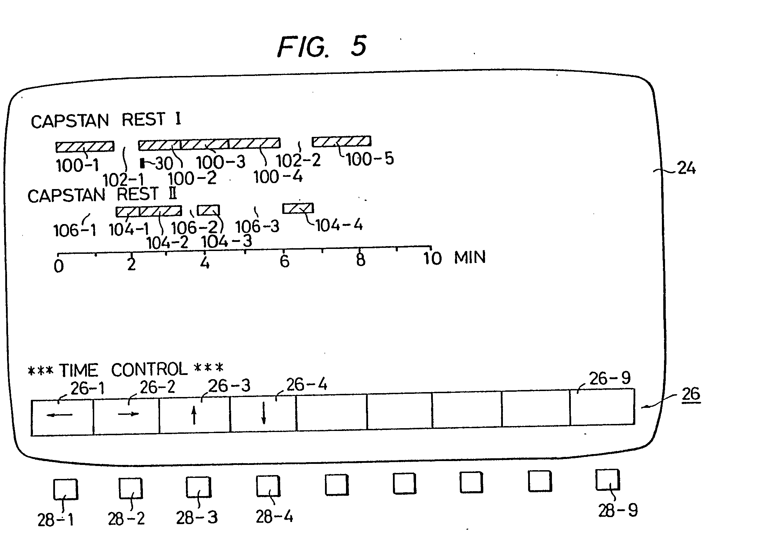

Referring to Figures 4 and 5, showing the state of the picture face of the display 24, an embodiment of the NC processing system according to the present invention will now be described.

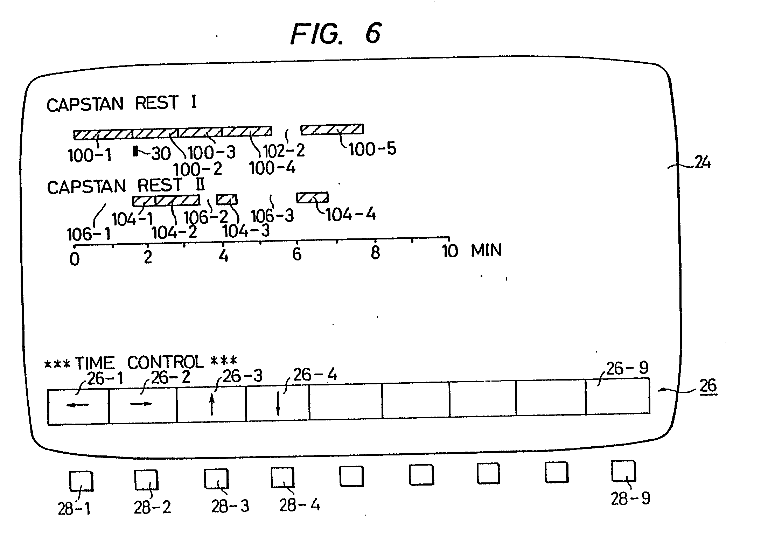

First, the respective operating periods consisting of the travelling and idling periods of each of the first and second capstan carriers 16 and 18 is obtained in accordance with an automatic program, and the thus obtained operating periods are simutively displayed in bar chart form on the display 24. An operator observes the operating periods displayed on the display 24 and recognizes the fact that the travelling periods 100—2 and 104—1 can be performed simultaneously. The operator moves a cursor 30 from its initial position shown in Figure 4 to the position of the displayed travelling period 100—2 shown in Figure 5 by suitably operating, in a selection mode, the menu selection switches 28—1, 28—2, 28—3 and 28—4 corresponding to leftward correction shift 26—1, rightward correction shift 26—2, upward correction shift 26—3, and downward correction shift 26—4. Then, in a correction mode, the operator operates the menu selection switch 28—1 corresponding to the leftward correction shift 26—1 to move the cursor 30 leftwardly as shown in Figure 6 so as to correction shift the travelling periods 100—2, 100—3, 100—4 and 100—5 and the idling period 102—2. Such a correction shift effects a change in the NC apparatus such that processing may be carried out according to the corrected bar chart.

According to the present invention, therefore, it is possible to reduce the processing period by correction shifting the travelling and idling periods displayed on the display.

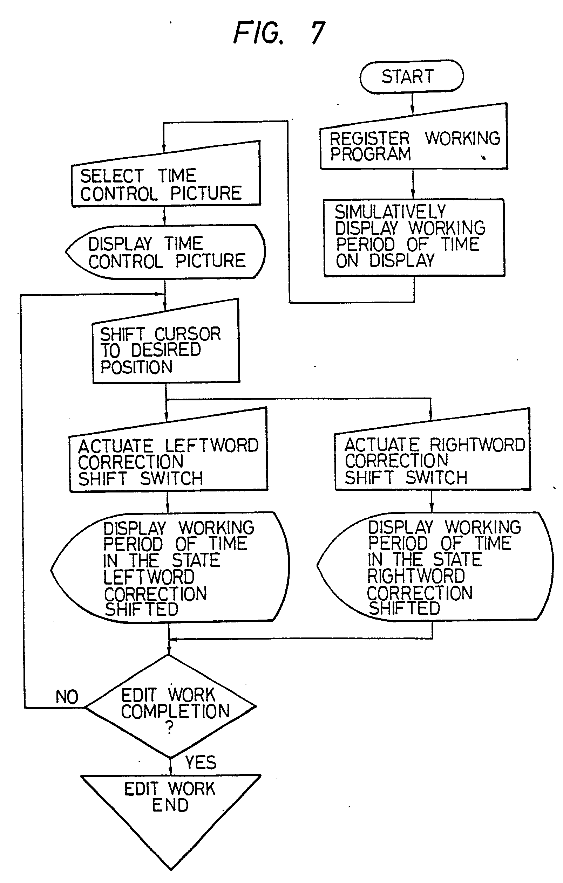

Figure 7 shows a flowchart according to this embodiment of the present invention.

In Figure 7, the operating program is first registered, the operating periods are simutively displayed on the display, and the time control picture is selected and displayed. The cursor is shifted to the position of a desired travelling or idling period and, for example, the leftward correction shift switch is operated so as to display the operating period in a state such that the working period is correction shifted to the left. Then, if the correction editing work has not been completed, further correction operations are effected, while in the case where editing has been completed, the editing operation is ended, and the NC apparatus may be operated according to the operations simulation shown on the display.

As described above, according to the present invention, the processing period can be reduced by correction shifting the travelling and idling periods on a display.

**Claims for the Contracting States: DE FR IT**

1. A numerical control system for a machine tool having at least two tool carriers (16, 18) characterised in that an operating program determines sequences of travelling and idling times for respective tool carriers (16, 18); in that means (24) are provided for displaying said time sequences as a graph whereby an operator may identify those travelling and idling times of said respective carriers (16, 18) which may be performed simultaneously; and in that means (26, 30) are provided for correction shifting said travelling and idling times so as to reduce the overall processing time.

2. A system as claimed in claim 1 characterised in that said sequences are displayed in the form of bar charts.

3. A system as claimed in claim 2 characterised in that said correction shifting means includes means (26, 30) for selecting a displayed portion of at least one of said bar charts and means for effecting time scale shifting of said selected display portion.

4. A system as claimed in claim 3 characterised in that said selecting means comprises a movable cursor (30), and said shifting means comprises control function operators (26—1 to 26—9) located adjacent said displaying means (24), said numerical control operating system operating to control the operations of said tool carriers according to the displayed time sequences.

5. A machine tool characterised by a numerical control system according to any one of the preceding claims.

**Claims for the Contracting State: GB**

1. A numerical control system for a machine tool having at least two tool carriers (16, 18) wherein an operating program is provided for determining sequences of travelling and idling times for respective tool carriers (16, 18); means (24) are provided for displaying said time sequences as a bar chart whereby an operator may identify those travelling and idling times of said respective carriers (16, 18) which may be performed simultaneously; and means (26, 30) are provided for correction shifting said travelling and idling times so as to reduce the overall processing time, said correction shifting means including means (26, 30) for selecting a displayed portion of at least one of said bar charts and means for effecting time scale shifting of said selected display portion.

2. A system as claimed in claim 1 characterised in that said selecting means comprises a movable cursor (30), and said shifting means comprises control function operators (26—1 to 26—9) located adjacent said displaying means (24), said numerical control operating system operating to control the operations of said tool carriers according to the displayed time sequences.

3. A machine tool characterised by a numerical control system according to any one of the preceding claims.

**Patentansprüche für die Vertragsstaaten: DE FR IT**

1. Numerisch gesteuertes System für eine Werkzeugmaschine mit mindestens zwei Werkzeugträgern (16, 18), dadurch gekennzeichnet, daß ein Bearbeitungsprogramm die Folgen von Fahr- und Ruhezeiten für die jeweiligen Werkzeugträger (16, 18) bestimmt, daß eine Einrich-

tung (24) vorgesehen ist zur Anzeige der Zeitfolgen in grafischer Darstellung, wobei ein Bediener jene Fahr- und Ruhezeiten der jeweiligen Werkzeugträger (16, 18) erkennen kann, die gleichzeitig stattfinden können, und daß eine Einrichtung (26, 30) vorgesehen ist zur Korrekturverschiebung der Fahr und Ruhezeiten zur Verminderung der gesamten Bearbeitungszeit.

2. System nach Anspruch 1, dadurch gekennzeichnet, daß die Folgen in Form von Balkendiagrammen angezeigt werden.

3. System nach Anspruch 2, dadurch gekennzeichnet, daß die Einrichtung zur Korrekturverschiebung Mittel (26, 30) zur Auswahl eines angezeigten Bereiches wenigstens eines Balkendiagramms sowie Mittel umfaßt zum Verschieben des Zeitmaßes dieses ausgewählten Anzeigebereiches.

4. System nach Anspruch 3, dadurch gekennzeichnet, daß die Mittel zur Auswahl einen verstellbaren Cursor (30) umfassen und daß die Verschiebemittel Steuerfunktionsoperatoren (26—1 bis 26—9) enthalten, die in der Nähe der Anzeigeeinrichtung (24) angeordnet sind, wobei das numerisch gesteuerte Bearbeitungssystem arbeitet, um die Operationen der Werkzeugträger entsprechend den angezeigten Zeitfolgen zu steuern.

5. Werkzeugmaschine, gekennzeichnet durch ein numerisch gesteuertes System nach einem der vorangehenden Ansprüche.

**Patentansprüche für den Vertragsstaat: GB**

1. Numerisch gesteuertes System für eine Werkzeugmaschine mit mindestens zwei Werkzeugträgern (16, 18), in dem ein Bearbeitungsprogramm vorgesehen ist zur Bestimmung der Folgen von Fahr- und Ruhezeiten für die jeweiligen Werkzeugträger (16, 18), eine Einrichtung (24) vorgesehen ist zur Anzeige der Zeitfolgen als Balkendiagramm, wobei ein Bediener jene Fahr- und Ruhezeiten der jeweiligen Werkzeugträger (16, 18) erkennen kann, die gleichzeitig stattfinden können, und eine Einrichtung (26, 30) vorgesehen ist zur Korrekturverschiebung der Fahr und Ruhezeiten zur Verminderung der gesamten Bearbeitungszeit, wobei die Einrichtung zur Korrekturverschiebung Mittel (26, 30) zur Auswahl eines angezeigten Bereiches wenigstens eines Balkendiagramms sowie Mittel umfaßt zum Verschieben des Zeitmaßes dieses ausgewählten Anzeigebereiches.

2. System nach Anspruch 1, dadurch gekennzeichnet, daß die Mittel zur Auswahl einen verstellbaren Cursor (30) umfassen und daß die Verschiebemittel Steuerfunktionsoperatoren (26—1 bis 26—9) enthalten, die in der Nähe der Anzeigeeinrichtung (24) angeordnet sind, wobei das numerisch gesteuerte Bearbeitungssystem arbeitet, um die Operationen der Werkzeugträger entsprechend den angezeigten Zeitfolgen zu steuern.

3. Werkzeugmaschine, gekennzeichnet durch ein numerisch gesteuertes System nach einem der vorangehenden Ansprüche.

**Revendications pour les Etats contractants: DE FR IT**

1. Un système à commande numérique pour une machine outil ayant au moins deux porte-outils (16, 18) caractérisé en ce qu'un programme de fonctionnement détermine des séquences de temps d'avance et de repos pour les porte-outils respectifs (16, 18); en ce que des moyens (24) sont prévus pour visualiser ces séquences de temps comme un graphique par lequel un opérateur peut identifier ces temps d'avance et de repos de ces porteurs respectifs (16, 18) qui peuvent être exécutés simultanément; et en ce que des moyens (26, 30) sont prévus pour déplacer pour correction ces temps d'avance et de repos de façon à réduire le temps de traitement global.

2. Un système comme revendiqué dans la revendication 1 caractérisé en ce que lesdites séquences sont visualisées sous la forme de diagrammes en bâtons.

3. Un système comme revendiqué dans la revendication 2 caractérisé en ce que lesdits moyens de déplacement pour correction comprennent des moyens (26, 30) pour sélectionner une zone visualisée d'au moins l'un de ces diagrammes en bâtons et des moyens pour effectuer un déplacement d'échelle de temps de cette zone de visualisation sélectionnée.

4. Un système comme revendiqué dans la revendication 3 caractérisé en ce que lesdits moyens de sélection comprennent un curseur mobile (30) et en ce que lesdits moyens de deplacement comprennent des operateurs de fonction de commande (26—1 à 26—9) placés à côté desdits moyens de visualisation (24), ledit système à fonctionnement à commande numérique fonctionnant pour commander le fonctionnement desdits porte-outils conformément aux séquences de temps visualisées.

5. Une machine-outil caractérisée par un système à commande numérique conformément à l'une quelcoque des revendications précédentes.

**Revendications pour l'Etats contractants: GB**

1. Un système à commande numérique pour une machine outil ayant au moins deux porte-outils (16, 18) dans lequel un programme de fonctionnement est prévu pour déterminer des séquences de temps d'avance et de repos pour les porte-outils respectifs (16, 18); des moyens (24) sont prévus pour visualiser ces séquences de temps comme un diagramme en bâtons par lequel un opérateur peut identifier ces temps d'avance et de repos de ces porteurs respectifs (16, 18) qui peuvent être exécutés simultanément; et des moyens (26, 30) sont prévus pour déplacer pour correction ces temps d'avance et de repos de façon à réduire le temps de traitement global, ces moyens de déplacement pour correction comprenant des moyens (26, 30) pour sélectionner une zone visualisée d'au moins l'un de ces diagrammes en bâtons et des moyens pour effectuer un déplacement d'échelle de temps de cette zone de visualisation sélectionnée.

2. Un système comme revendiqué dans la revendication 1 caractérisé en ce que lesdits moyens de sélection comprennent un curseur mobile (30) et lesdits moyens de déplacement comprennent des opérateurs de fonction de commande (26—1 à 26—9) placés à côté desdits moyens de visualisation (24), ce système à fonc-tionnement à commande numérique fonction-nant pour commander le fonctionnement des porte-outils conformément aux séquences de temps visualisées.

3. Une machine-outil caractérisée par un système à commande numérique conformément à l'une quelconque des revendications précé-dentes.

## FIG. 1

# FIG. 2

CAPSTAN REST I
16

CAPSTAN REST II
18

100-1   102-1   100-2   100-3   100-4   102-2   100-5

106-1   104-1   104-2   104-3   106-3   104-4
106-2

t

# FIG. 3

CAPSTAN REST I
16

CAPSTAN REST II
18

100-1   100-2   100-3   100-4   102-2   100-5

106-1   104-1   104-2   106-2   104-3   106-3   104-4

t

# FIG. 4

CAPSTAN REST I

100-1  102-1  100-2  100-4  102-2  100-5
100-3

CAPSTAN. REST II

106-1  104-2  104-3  104-4
104-1  106-2  106-3

0    2    4    6    8    10  MIN

30

*** TIME CONTROL ***

26-1  26-2  26-3  26-4                26-9

| ← | → | ↑ | ↓ | | | | | |

28-1  28-2  28-3  28-4              28-9

24

26

EP 0 104 503 B1

## FIG. 5

CAPSTAN REST I

100-1  102-1  ▶~30  100-2  100-3  100-4  102-2  100-5

CAPSTAN REST II

106-1  104-1  106-2  104-2  104-3  106-3  104-4

0    2    4    6    8    10  MIN

\*\*\* TIME CONTROL \*\*\*

26-1  26-2  26-3  26-4  26-9

| ← | → | ↑ | ↓ | | | | | |

28-1  28-2  28-3  28-4  28-9

24

26

FIG. 6

CAPSTAN REST I

100-1  ▮ 30  100-3  102-2  100-5
        100-2  100-4

CAPSTAN REST II

106-1  106-2  106-3  104-4
104-1  104-2  104-3

0  2  4  6  8  10 MIN

*** TIME CONTROL ***

26-1  26-2  26-3  26-4  26-9

28-1  28-2  28-3  28-4  28-9

24

26

5

EP 0 104 503 B1

# FIG. 7

```
                                    ┌──────────┐
                                    │  START   │
                                    └────┬─────┘
                                         │
                                    ┌────▼──────────────┐
                                    │ REGISTER  WORKING │
                                    │ PROGRAM           │
                                    └────┬──────────────┘
                                         │
                                    ┌────▼──────────────┐
                                    │ SIMULATIVELY      │
                                    │ DISPLAY WORKING   │
                                    │ PERIOD OF TIME    │
                                    │ ON DISPLAY        │
                                    └───────────────────┘
    ┌──────────────────┐
    │ SELECT  TIME     │
    │ CONTROL  PICTURE │
    └────┬─────────────┘
         │
    ┌────▼─────────────┐
    │ DISPLAY TIME     │
    │ CONTROL  PICTURE │
    └────┬─────────────┘
         │
    ┌────▼─────────────┐
    │ SHIFT CURSOR     │
    │ TO DESIRED       │
    │ POSITION         │
    └────┬─────────────┘
         │
    ┌────▼─────────────┐      ┌───────────────────┐
    │ ACTUATE LEFTWORD │      │ ACTUATE RIGHTWORD │
    │ CORRECTION       │      │ CORRECTION        │
    │ SHIFT  SWITCH    │      │ SHIFT  SWITCH     │
    └────┬─────────────┘      └─────┬─────────────┘
         │                          │
    ┌────▼─────────────┐      ┌─────▼─────────────┐
    │ DISPLAY  WORKING │      │ DISPLAY  WORKING  │
    │ PERIOD  OF  TIME │      │ PERIOD  OF  TIME  │
    │ IN  THE  STATE   │      │ IN  THE  STATE    │
    │ LEFTWORD         │      │ RIGHTWORD         │
    │ CORRECTION       │      │ CORRECTION        │
    │ SHIFTED          │      │ SHIFTED           │
    └──────────────────┘      └───────────────────┘
                    ╱╲
          NO       ╱  ╲
         ◄────────╱EDIT WORK╲
                  ╲COMPLETION╱
                   ╲   ?    ╱
                    ╲  ╱
                     ╲╱ YES
                    ╱╲
                   ╱  ╲
                  ╱EDIT WORK╲
                  ╲  END   ╱
                   ╲      ╱
                    ╲    ╱
```

6